Europäisches Patentamt

European Patent Office

Office européen des brevets

(19)

(11) Numéro de publication: **0 206 964**
**A1**

## (12) DEMANDE DE BREVET EUROPEEN

(21) Numéro de dépôt: 86440046.0

(22) Date de dépôt: **13.06.86**

(51) Int. Cl.⁴: **B01D 53/34** , F23J 15/00

(30) Priorité: 13.06.85 FR 8509117

(43) Date de publication de la demande:
**30.12.86 Bulletin  86/52**

(84) Etats contractants désignés:
**DE GB LU NL SE**

(71) Demandeur: **Fritz, Patrice**
**11c, rue d'Altenheim**
**F-67100 Strasbourg(FR)**

(72) Inventeur: **Fritz, Patrice**
**11c, rue d'Altenheim**
**F-67100 Strasbourg(FR)**

(74) Mandataire: **Metz, Paul**
**Cabinet METZ PATNI 95, rue de la Ganzau**
**F-67100 Strasbourg(FR)**

(54) **Unité de filtration et de neutralisation de l'anhydride sulfureux contenu dans les fumées d'une chaudière.**

(57) Unité caractérisée en ce qu'elle se compose d'un récupérateur de chaleur (2), d'un bloc de filtration (9), d'une chambre de désulfurisation (30) et d'un étage final constitué de plusieurs filtres électrostatiques, d'un déshumidificateur (53), d'un filtre à charbon actif (57) et d'une turbine d'accélération (3).

Cette invention intéresse les constructeurs d'appareils et de matériel pour l'assainissement et l'épuration de l'air.

FIG 2

## Unité de filtration et de neutralisation de l'anhydride sulfureux contenu dans les fumées d'une chaudière

La présente invention se rapporte à une unité de filtration des particules et de neutralisation de l'anhydride sulfureux contenus dans les fumées émises par une chaudière domestique collective ou industrielle.

La présente invention se rapporte plus particulièrement à une telle unité traitant l'anhydride sulfureux à température ambiante.

On connaît maintenant de façon précise les principales sources de pollution de l'air et leur importance relative. Dans le nombre, les chaudières individuelles, collectives ou industrielles sont responsables d'une forte proportion d'émanations dans l'air de substances volatiles polluantes, telles notamment l'anhydride sulfureux, nitreux, l'oxyde de carbone, le gaz carbonique et leurs composés.

La présente invention a pour but de supprimer ou tout au moins de diminuer fortement la pollution par particules mais surtout la quantité d'anhydride sulfureux émise par les chaudières domestiques, collectives ou industrielles.

Pour des raisons de sécurité, l'unité selon l'invention est conçue pour se placer dans la chaufferie, en aval du conduit de sortie des fumées, en intégrant un dispositif approprié de récupération de chaleur permettant un abaissement suffisant de la température des fumées.

Par ailleurs, pour des raisons d'efficacité et de rendement, le traitement d'épuration et de filtration doit s'effectuer à basse température par rapport aux températures des fumées, c'est-à-dire à la température normale d'ambiance des pièces d'habitation.

L'invention a pour but de réunir les principales conditions d'efficacité et de proposer une unité de filtration, d'épuration et de désulfurisation pour fumées de chaudière qui fonctionne à un degré d'effica cité exceptionnel.

L'unité d'épuration se compose d'un échangeur-récupérateur de chaleur permettant d'abaisser la température des fumées à une valeur voisine de celle de l'ambiante, d'un bloc de filtration à effet électrostatique, d'une chambre de désulfurisation, d'un déshumidificateur et d'un filtre à charbon actif ainsi que d'une turbine d'accélération du flux gazeux sortant.

Le procédé consiste à abaisser la température des fumées par récupération d'énergie calorifique à l'aide d'un échangeur jusqu'à des températures de l'ordre de 10 -25°C, à filtrer les fumées, à leur faire subir un double lavage à contre-courant par deux flux en série d'une pulvérisation d'une solution neutralisante pour l'anhydride sulfureux, à séparer les gouttelettes, à déshumidifier et à filtrer à nouveau et à retenir la quantité restante d'anhydride sulfureux et d'autres résidus polluants gazeux dans un filtre à charbon actif.

Le principal avantage de l'invention concerne d'abord sa haute efficacité de neutralisation de l'anhydride sulfureux, principale cause de pollution.

Il présente, en outre, les avantages complémentaires suivants :

. économie d'énergie aux environs de 25 % ;

. récupération et épuration simultanées ;

. production d'air chaud ou d'eau chaude ;

. absence de condensation dans la cheminée due au déshydrateur intégré ;

. on ne modifie ni la chaudière, ni la cheminée ;

. rapidité d'installation par module ;

. fonctionnement entièrement automatique.

. pas de limitation en température de sortie des fumées.

Les caractéristiques techniques et d'autres avantages de l'invention sont consignés dans la des cription qui suit, effectuée à titre d'exemple non limitatif sur la variante de base de l'invention en référence aux dessins accompagnants dans lesquels :

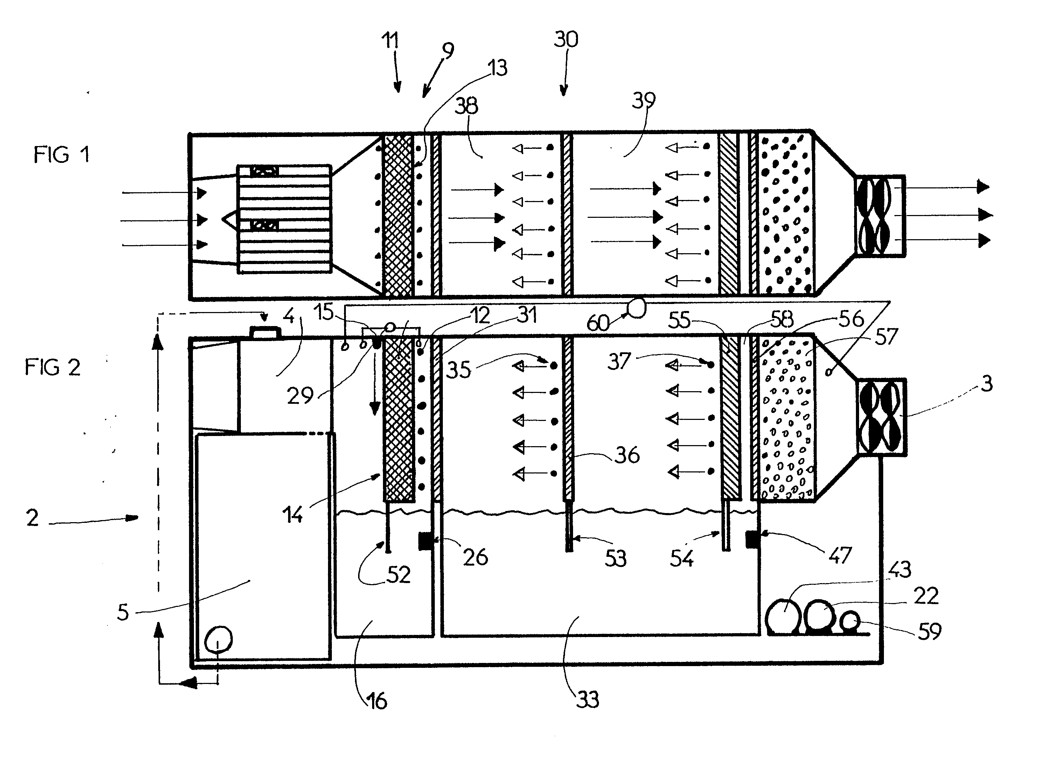

. La figure 1 est une vue en coupe horizontale de l'unité selon l'invention ;

. la figure 2 est une vue en coupe verticale de l'unité selon l'invention ;

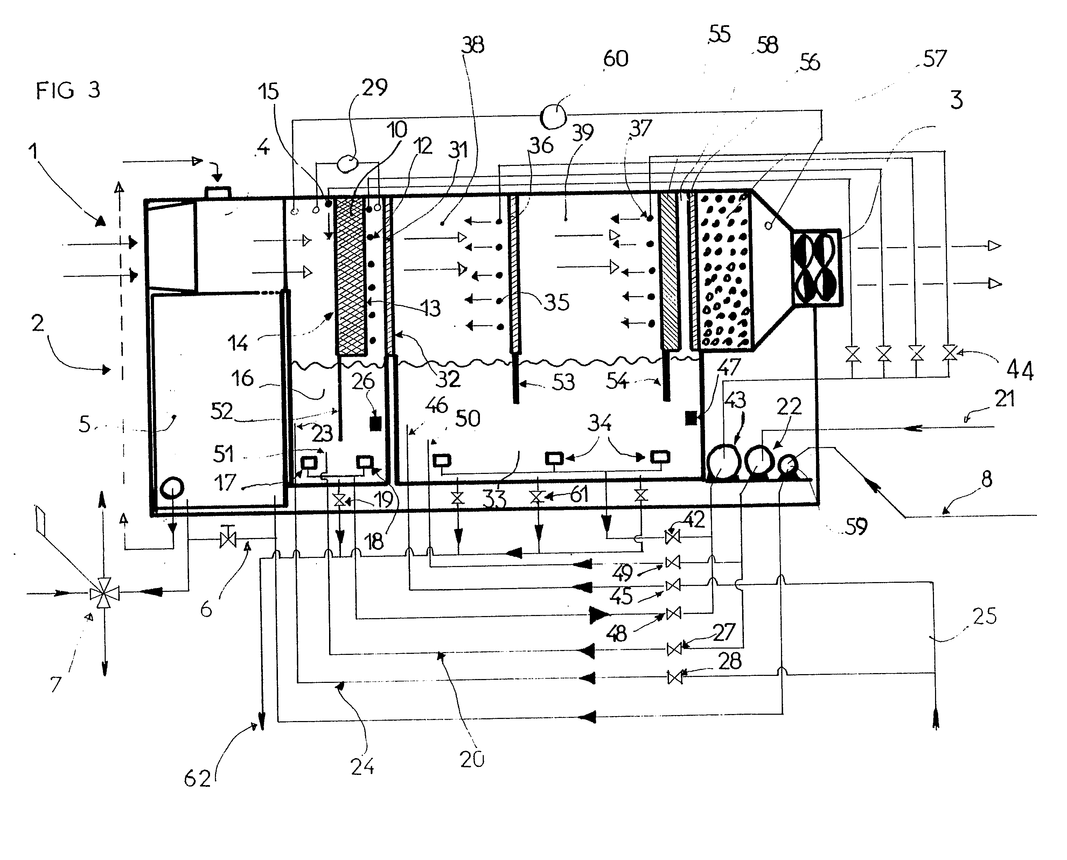

. la figure 3 est une vue en coupe verticale - schématique montrant l'unité complète avec son circuit hydraulique;

On examinera l'unité selon l'invention en suivant le trajet des fumées depuis la sortie de la chaudière jusqu'à l'entrée dans la cheminée.

L'unité de filtration et de neutralisation de l'anhydridre sulfureux selon l'invention forme un caisson modulaire 1 disposé horizontalement, à utiliser horizontalement dans la chaufferie, au voisinage de la chaudière, entre la sortie des fumées et la cheminée. Il se compose de plusieurs blocs fonctionnels placés en série sur le trajet horizontal des fumées.

Aux extrémités de l'unité selon l'invention, sont prévus d'une part, côté chaudière, un récupérateur de chaleur 2 et, d'autre part, une turbine double d'extraction 3 qui a pour but d'augmenter le débit de passage des fumées le long de l'unité et de retrouver en sortie, les mêmes conditions aérauliques qu'en sortie de chaudière.

Le récupérateur de chaleur 2 est intégré à l'unité selon l'invention car il réalise la première phase du procédé, à savoir l'abaissement suffisant de la température des fumées jusqu'à la zone des températures ambiantes, 10 -25° C, zone dans laquelle l'efficacité de désulfurisation est optimale.

Le récupérateur de chaleur 2 est de préférence du type mixte air/air plus air/eau, en deux étages dont le premier serait un échangeur par exemple air/air 4 à plaques à sortie communiquant avec la batterie de tuyaux par exemple en cuivre d'un échangeur air/eau 5 dont le circuit hydraulique 6 est relié au circuit de chauffage par radiateurs et plus généralement par corps de chauffe à travers une vanne mélangeuse 7, par exemple simplement par mise en série dans le circuit retour 8 des corps de chauffe. L'avantage de cette disposition concerne la propreté de l'échangeur à batterie. En effet, la batterie est traversée par un flux d'air propre de l'échangeur air/air 4 et, par conséquent, ne peut être encrassée par les fumées.

Selon les conditions d'utilisation, l'air sortant de l'échangeur mixte pourra être utilisé en chauffage par insufflation dans les pièces ou locaux ou recyclé comme le montre la boucle sur les figures.

Les fumées sortant de l'échangeur à air 4 entrent dans un bloc de préfiltration 9 formé d'un préfiltre électrostatique 10 du type ininflammable et régénérable en fils de fibres de verre.

Ce filtre retiendra les plus grosses particules solides emportées par ou contenues dans les fumées (imbrûlés, suie...).

Il s'agit d'une première filtration de grande efficacité jusqu'à une granulométrie de trois microns et de bonne efficacité jusqu'à un micron, le pouvoir de rétention diminuant ensuite.

Ce préfiltre est pourvu du dispositif de nettoyage 11 sous la forme d'une ou de plusieurs rampes de pulvérisation 12 qui projettent horizontalement des jets puissants sur toute la surface arrière 13 du préfiltre. La pression de l'eau fait traverser l'épaisseur du préfiltre aux particules retenues qui apparaissent sur la face avant 14.

Il suffit de laver la face avant 14 par une rampe supérieure 15 à jets verticaux pour nettoyer complètement le filtre. Les particules ruissellent dans le bac de récupération 16 où elles se trouvent pompées pour recyclage à travers deux crépines 17 et 18, l'évacuation à l'égout s'effectuant directement par le fond à travers une électrovanne 19.

On utilise, pour nettoyer la face avant 14 une solution neutralisante à l'égard de l'anhydride sulfureux telle par exemple de l'eau sodée. De ce fait, le bac de récupération 16 est alimenté en eau sodée par un conduit 20 relié au réseau d'eau sodée 21 à travers une pompe de distribution 22. La concentration en eau sodée est réglable à l'intérieur du bac 16 par une injection parallèle 23 d'eau pure par le conduit 24 raccordé à un ensemble de distribution 25 lui-même relié au réseau urbain.

La concentration en eau sodée est réglable à partir d'un indicateur électronique d'acidité 26 indiquant le potentiel d'hydrogène de l'eau à un circuit de régulation approprié agissant sur les électrovannes 27 et 28 d'admission d'eau sodée et d'admission d'eau pure.

Les phases de nettoyage du préfiltre 10 ont lieu pendant les temps d'arrêt du brûleur donnés par un circuit de surveillance.

Par ailleurs, un pressostate différentiel de préfiltre 29 entre son entrée et la sortie fournit les informations relatives à son taux d'encrassement à une unité centrale de commande qui provoque le déclenchement d'une phase de nettoyage entre deux périodes de fonctionnement du brûleur.

Il y a lieu d'observer que, dans le cas de chaudières à feu continu, chaudières à charbon, à bois, à granulés de bois..., les fumées traversent en permanence le préfiltre. Dans ce cas, l'unité selon l'invention comportera une chambre de préfiltration à deux compartiments séparés comportant chacun un préfiltre. Les deux préfiltres seront mis en service alternativement grâce à un dispositif d'orientation des fumées par exemple à volet motorisé commandé par les pressostats différentiels de préfiltre. Ainsi, le nettoyage d'un filtre se produira pendant que l'autre sera en service et inversement.

Les fumées pénètrent ensuite dans la chambre de désulfurisation 30, en traversant ensuite un filtre électrostatique 31 à forte rétention de particules, d'efficacité à 100 % pour trois microns et 90 % pour un micron. Ce filtre retient la majorité des particules restantes. Il se compose par exemple d'un média sec en matière plastique à haut degré de polymérisation, à haut rendement sur les particules fines.

La face arrière 32 du filtre 31 est arrosée en permanence à contre-courant par un flux humide d'une solution neutralisante à l'égard de l'anhydride sulfureux, par exemple de l'eau sodée provenant d'un bac de récupération 33 formant le fond de la chambre de pulvérisation. Cette solution est aspirée dans le bac de récupération 33 à travers un ensemble de crépines 34 uniformément réparties et projetée à contre-courant contre la face arrière 32 du filtre 31 par plusieurs rampes de pulvérisation étagées telles que 35 équipées de gicleurs à jets carrés. Les jets sortant forment un microbrouillard actif de très fines gouttelettes se propageant à contre-courant. Au cours de leur trajet, les fines gouttelettes réagissent avec l'anhydride sulfureux pour le neutraliser en formant du sulfate de sodium ou un autre sel selon la solution neutralisante employée.

Le nettoyage de ce filtre relève de l'entretien périodique. La solution neutralisante projetée ruisselle le long du filtre jusqu'au bac de récupération 33 de la chambre de désulfurisation 30. Cette dernière se poursuit par un filtre médian 36 à action électrostatique de même type que le filtre 31 dont la face arrière est également arrosée de la même façon, par plusieurs rampes de pulvérisation 37. Cette disposition permet de partager le volume intérieur de la chambre de désulfurisation 30 en deux compartiments de pulvérisation respectivement 38 et 39.

Le bac de récupération 33 d'eau sodée comprend un circuit de recyclage 40 formé d'une aspiration basse 41 à travers le groupe 34 de crépines, une électrovanne 42 et ensuite de la pompe principale 43 et d'un groupe d'électrovannes 44 vers les rampes de pulvérisation 35 et 37 et vers le dispositif de nettoyage 11 du préfiltre 10.

Le bac de récupération 33 est alimenté en eau pure à partie du réseau à travers une électrovanne 45 et un conduit d'injection 46. On prévoit le même dispositif de régulation de la concentration en eau sodée à partir d'un indicateur électronique d'acidité 47 propre au bac de récupération 33.

Il en est de même pour le bac de récupération 16 qui est relié à la pompe 43 à travers les crépines 17 et 18 et l'électrovanne 48.

L'eau sodée ou la solution neutralisante provient d'une réserve extérieure à travers la pompe de distribution 22 et est admise dans les bacs de récupération 16 et 33 à travers les électrovannes 27 et 49 jusqu'aux conduits d'injection 50 et 51.

La deuxième série de rampes de pulvérisation 37 d'eau sodée permet, en plus, de neutraliser les infimes particules solides de dimensions inférieures au micron.

Les filtres électrostatiques 10, 31 et 36 se prolongent verticalement vers le bac de récupération concerné par des cloisons de séparation 52, 53 et 54 pour éviter le passage des fumées entre l'extrémité inférieure des filtres et le niveau du liquide dans chaque bac

Un filtre électrostatique supplémentaire 55 agit en tant que séparateur de gouttelettes pour retenir la majeure quantité de l'humidité contenue dans les fumées traitées.

Un dernier filtre électrostatique 56 de même type que les derniers joue le rôle de préfiltre pour un filtre à charbon actif 57 présentant une forte rétention au gaz sulfureux et autres résidus gazeux polluants avant le passage dans la turbine d'extraction.

A titre de variante et en cas de besoin, l'inventeur a prévu l'interposition d'un bloc de déshumidification ou chambre de condensation 58 entre les deux derniers filtres électrostatiques 55 et 56 ou entre le dernier filtre électrostatique 56 et le filtre à charbon actif 57.

Concernant le déshumidificateur 58, il s'agit d'une batterie froide à détente directe du type employé dans les circuits frigorifiques ou un élément classique de condensation.

Pour le bon fonctionnement hydraulique de l'installation de chauffage, un circulateur supplémentaire 59 monté sur le circuit de retour 8 des corps de chauffe compense les pertes de charge au travers de la batterie de l'échangeur à eau 5.

Pour respecter les conditions de fonctionnement aéraulique, en particulier pour retrouver la même pression d'aspiration des fumées qu'à la sortie de la chaudière, on commande la puisssance de la turbine 3 à partir des informations fournies par un pressostate différentiel général 60, monté entre l'entrée du préfiltre 10 et la sortie du filtre à charbon actif 57.

L'évacuation à l'égoût des bacs 16 et 33 se réalise en partie basse respectivement à travers l'électrovanne 19 et un groupe 61 d'électrovannes reliées à un conduit commun d'évacuation 62.

Le fonctionnement général de l'unité selon l'invention est coordonné par un programmateur central qui commande principalement les séquences de nettoyage du préfiltre 10 pendant les temps d'arrêt du brûleur et la régulation en concentration de la solution neutralisante.

Le procédé mis en oeuvre par l'unité selon l'invention consiste à abaisser la température des fumées à une valeur égale ou voisine de la température ambiante, c'est-à-dire aux environs de 10 -25°C, à débarrasser les fumées de la majorité des particules par passage dans un préfiltre lavé par une solution neutralisante pour l'anhydride sulfureux, à faire traverser les fumées dans une chambre de traitement comprenant deux filtres électrostatiques d'extrémité et un filtre médian définissant deux compartiments successifs, chambre dans laquelle on forme à contre-courant, deux nébulisations successives d'une solution neutralisante à l'égard de l'anhydride sulfureux, cette solution en concentration régulée de l'ordre de 30 % étant projetée horizontalement à travers les compartiments entre les deux filtres électrostatiques contre les faces arrière des premiers filtres et récupérée dans un bac inférieur pour être recyclée. Les fumées traversent ensuite un groupe de deux filtres électrostatiques séparés par un déshumidificateur puis un filtre à charbon actif pour être accélérées avant d'être évacuées dans la cheminée.

A titre d'exemple on indiquera ci-après, en plus de l'eau sodée, plusieurs produits présentant une activité neutralisante similaire à l'égard de l'anhydride sulfureux et pouvant donc être employés dans cette invention. Il s'agit principalement d'une solution de potasse, mais aussi de l'alcool, de l'acétone, de la poudre de zinc très fine en suspension dans l'eau, d'un produit connu sous la dénomination coconat de charcoal, de l'iode en interaction par oxydation.

L'invention a été décrite à propos d'une réalisation particulière. Il est bien entendu qu'elle ne saurait s'y limiter mais, qu'au contraire, diverses modifications simples et changements sans apport inventif telles que substitutions par des moyens ou matériaux équivalents, adjonction d'éléments inopérants, entrent pleinement dans son cadre.

## Revendications

1. Unité de filtration des particules et de neutralisation de l'anhydride sulfureux pour fumées émises par une chaudière domestique, collective ou industrielle, caractérisée en ce qu'elle se compose d'une chaîne d'épuration formée d'un récupérateur de chaleur (2) abaissant la température des fumées jusqu'à la température d'ambiance soit, 10 -25°C, un bloc de préfiltration - (9), une chambre de désulfurisation (30) et un étage final à chambre de condensation (58) pour se terminer par une turbine d'extraction (3), ledit bloc de filtration étant doublé pour une chaudière à feu continu.

2. Unité selon la revendication 1, caractérisée en ce que le caisson modulaire (1) qui la contient est à utiliser disposé horizontalement entre la sortie des fumées de la chaudière et la cheminée.

3. Unité selon la revendication 1, caractérisée en ce que le récupérateur de chaleur (2) est à deux étages en série, un premier étage en récupérateur air/air (4) et un deuxième étage en récupérateur air/eau (5) monté dans le circuit hydraulique du chauffage.

4. Unité selon la revendication 3 caractérisée en ce que le récupérateur (2) présente un circuit d'air fermé.

5. Unité selon la revendication 1, caractérisée en ce que le bloc de préfiltration (9) est formé d'un préfiltre électrostatique (10) du type ininflammable et régénérable et en ce que ledit préfiltre est associé à un dispositif de nettoyage (11) constitué de plusieurs rampes de pulvérisation (12) projetant horizontalement vers sa face arrière (13) des jets puissants d'une solution neutralisante à l'égard de l'anhydride sulfureux, le dispositif de nettoyage comprenant en outre, au niveau de la face avant, une rampe supérieure (15) à jets verticaux permettant de nettoyer complètement la face avant, le compartiment de préfiltration se terminant vers le bas par un bac de récupération (16) alimenté en eau pure et en solution neutralisante et relié au dispositif de nettoyage par un circuit de recyclage.

6. Unité selon la revendication 1, caractérisée en ce que la chambre de désulfurisation se compose de deux compartiments (38) et (39) de pulvérisation délimités par deux filtres électrostatiques d'extrémité (31) et (55) et un filtre électrostatique médian (36), chaque compartiment étant traversé à contre courant par une nébulisation de microbrouillard d'une solution neutralisante à l'égard de l'anhydride sulfureux, générée à contre-courant par des rampes de pulvérisation (35) et - (37) vers la face du filtre opposé, la chambre de désulfurisation se prolongeant vers le bas par un bac de récupération en communication avec les rampes (35) et (37) par un circuit de recyclage.

7. Unité selon les revendications 5 et 6 caractérisée en ce que chaque bac de récupération - (26) et (33) comprend un indicateur d'acidité (26) et (47) associé à un circuit de régulation séparé agissant sur l'admission en eau pure et en solution neutralisante dans chacun desdits bacs.

8. Unité selon la revendication 1, caractérisée en ce que l'étage final se compose d'une chambre de condensation (58) d'un dernier filtre électrostatique (56) et d'un filtre à charbon actif.

9. Procédé de filtration et de neutralisation de l'anhydride sulfureux pour fumées émises par une chaudière domestique collective ou industrielle caractérisé en ce que l'on abaisse la température des fumées jusqu'aux températures ambiantes, c'est-à-dire aux environs de 10 -25°C, par passage dans un récupérateur, que l'on débarrasse les fumées à basse température par passage dans un préfiltre lavé par une solution neutralisante pour l'anhydride sulfureux, que l'on fait passer les fumées dans une chambre de traitement de désulfurisation comprenant deux filtres électrostatiques d'extrémité et un filtre médian définissant deux compartiments successifs, chambre dans laquelle on forme, à contre-courant, deux nébulisations successives d'une solution neutralisante à l'égard de l'anhydride sulfureux en concentration régulée de l'ordre de 30 % projetées horizontalement à travers les compartiments contre les faces arrière des premiers filtres, solution récupérée dans un bac inférieur pour être recyclée, l'activité de la solution étant en permanence régulée à partir d'un indicateur d'acidité.

10. Procédé selon la revendication 9 caractérisé en ce que la solution neutralisante est une
solution de soude ou de potasse.

FIG 1

FIG 2

0 206 964

FIG 3

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | DE-A-2 733 029 (STEAG) | | B 01 D 53/34 F 23 J 15/00 |
| | --- | | |
| A | FR-A- 775 827 (M. LECLERC) | | |
| | ----- | | |

|  |
|---|
| DOMAINES TECHNIQUES RECHERCHES (Int. Cl.4) |
| B 01 D 53/00 F 23 J 15/00 |

Le présent rapport de recherche a été etabli pour toutes les revendications

| Lieu de la recherche LA HAYE | Date d'achèvement de la recherche 17-09-1986 | Examinateur BOGAERTS M.L.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié a la date de dépôt ou après cette date
D : cité dans la demande
L : cité pour d'autres raisons

& : membre de la même famille, document correspondant

OEB Form 1503 03 82